# EUROPEAN PATENT SPECIFICATION

(11) **EP 3 066 865 B1**
(45) Date of publication and mention of the grant of the patent: **26.04.2017**
(21) Application number: 14799945.2
(22) Date of filing: 04.11.2014
(51) Int. Cl.: H04W 28/06, H04L 12/851

(54) **TRAFFIC CLASSIFICATION ELEMENT CLASSIFIER PARAMETERS**
KLASSIFIZIERERPARAMETER FÜR VERKEHRSKLASSIFIZIERERELEMENTE
PARAMÈTRES DE CLASSIFICATEUR D'ÉLÉMENT DE CLASSIFICATION DE TRAFIC

(30) Priority: 04.11.2013 US 201361899876 P; 03.11.2014 US 201414531907
(43) Date of publication of application: 14.09.2016
(73) Proprietor: Qualcomm Incorporated, San Diego, CA 92121-1714 (US)
(72) Inventor: ASTERJADHI, Alfred, San Diego, California 92121-1714 (US); JAFARIAN, Amin, Princeton, New Jersey 08540 (US)
(74) Representative: Wagner & Geyer
(86) International application number: PCT/US2014/063815
(87) International publication number: WO 2015/066677

(56) References cited:
- US-A1- 2013 155 952
- BROADCOM CORPORATION: "Frame Classification Based on MAC Header Content ; 11-12-1089-00-00ah-frame-classification-ba sed-on-mac-header-content", IEEE SA MENTOR; 11-12-1089-00-00AH-FRAME-CLASSIFICATION-BA SED-ON-MAC-HEADER-CONTENT, IEEE-SA MENTOR, PISCATAWAY, NJ USA, vol. 802.11ah, 17 September 2012 (2012-09-17), pages 1-15, XP068039807, [retrieved on 2012-09-17]

## Description

### BACKGROUND

### Field

Certain aspects of the present disclosure generally relate to wireless communications and, more specifically, to traffic classification (TCLAS) element classifier parameters.

### Description of Related Art

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

In order to address the desire for greater coverage and increased communication range, various schemes are being developed. One such scheme is the sub-1-GHz frequency range (e.g., operating in the 902 - 928 MHz range in the United States) being developed by the Institute of Electrical and Electronics Engineers (IEEE) 802.11ah task force. This development is driven by the desire to utilize a frequency range that has greater wireless range than other IEEE 802.11 groups and has lower obstruction losses.

Attention is drawn to IEEE 802.11 working group document entitled "Frame Classification Based on MAC Header Content" by Broadcom Corporation, which directed to traffic classification / filtering such that a STA receives only traffic that matches classification parameters. The classification parameters are contained in a TCLASS information element (IE), which is part of a management frame to establish a classification agreement between the STA and an access point (AP). The TCLASS IE comprises inter alia a classifier type, a classifier mask and parameters. The classifier type defines the structure of the parameters.

### Summary

In accordance with the present invention a method and apparatus for traffic classification element classifier parameters as set forth in the independent claims are provided. Preferred embodiments are described in the dependent claims.

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications between access points and stations in a wireless networks.

Certain aspects of the present disclosure provide techniques, corresponding apparatus, and program products, for traffic classification (TCLAS) element classifier parameters.

Certain aspects of the present disclosure provide an apparatus for wireless communications. The apparatus generally includes a processing system configured to generate a frame with an element that contains one or more fields, wherein the one or more fields identify at least one medium access control (MAC) packet data unit (MPDU) and identify a type of parameters in the element based, at least in part, on one or more fields in the at least one MPDU and an interface to output the generated frame for transmission.

Certain aspects of the present disclosure provide a method for wireless communications. The method generally includes generating a frame with an element that contains one or more fields, wherein the one or more fields identify at least one MPDU, and identify a type of parameters in the element based, at least in part, on one or more fields in the at least one MPDU and outputting the generated frame for transmission.

Certain aspects of the present disclosure provide an apparatus for wireless communications. The apparatus generally includes means for generating a frame with an element that contains one or more fields, wherein the one or more fields identify at least one MPDU and identify a type of parameters in the element based, at least in part, on one or more fields in the at least one MPDU and means for outputting the generated frame for transmission.

Certain aspects of the present disclosure provide a computer program product for wireless communications. The computer program product generally includes a computer-readable medium having instructions stored thereon for: generating a frame with an element that contains one or more fields, wherein the one or more fields identify at least one MPDU and identify a type of parameters in the element based, at least in part, on one or more fields in the at least one MPDU and outputting the generated frame for transmission.

Certain aspects of the present disclosure provide a station. The station generally includes at least one antenna, a processing system configured to generate a frame with an element that contains one or more fields, wherein the one or more fields identify at least one MPDU and identify a type of parameters in the element based, at least in part, on one or more fields in the at least one MPDU, and a transmitter configured to transmit, via the at least one antenna, the generated frame for transmission.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a diagram of an example wireless communications network, in accordance with certain aspects of the present disclosure.
FIG. 2 illustrates a block diagram of an example access point and user terminals, in accordance with certain aspects of the present disclosure.
FIG. 3 illustrates a block diagram of an example wireless device, in accordance with certain aspects of the present disclosure.
FIG. 4 illustrates a block diagram of example operations for wireless communications by a speed frame initiator, in accordance with certain aspects of the present disclosure.
FIG. 4A illustrates example means capable of performing the operations shown in FIG. 4, in accordance with certain aspects of the present disclosure.
FIG. 5 illustrates an example short frame format, in accordance with certain aspects of the present disclosure.
FIG. 6 illustrates subfields of the frame control field 502, in accordance with certain aspects of the present disclosure.
FIG. 7 is a table containing example traffic classification (TCLAS) element classifier parameters, in accordance with certain aspects of the present disclosure.

To facilitate understanding, identical reference numerals have been used, where possible, to designate identical elements that are common to the figures. It is contemplated that elements disclosed in one embodiment may be beneficially utilized on other embodiments without specific recitation.

### DETAILED DESCRIPTION

Certain aspects of the present disclosure provide techniques, corresponding apparatus, and program products, for traffic classification (TCLAS) element classifier parameters for short frames. For example, a TCLAS element may be carried in a frame and may have a frame classifier type field identifying classifier parameter types in the TCLAS elements, for example, based on a type field of medium access control (MAC) protocol data units (MPDUs) to be classified and identified in the frame (e.g., for Type 3, protocol version 1).

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configuration, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

The acronyms listed below may be used herein, consistent with commonly recognized usages in the field of wireless communications. Other acronyms may also be used herein, and if not defined in the list below, are defined where first appearing herein.
- ACK: Acknowledgement
- A-MPDU: Aggregated Media Access Control Protocol Data Unit
- AP: Access Point
- BA: Block ACK
- BAR: Block ACK Request
- CRC: Cyclic Redundancy Check
- DIFS: Distributed Interframe Space
- EOF: End of Frame
- EIFS: Extended Interframe Space
- FCS: Frame Check Sequence
- ID: Identifier
- IEEE: Institute of Electrical and Electronic Engineers
- LTF: Long Training Field
- MAC: Media Access Control
- MSB: Most Significant Bit
- MIMO: Multiple Input Multiple Output
- MPDU: MAC Protocol Data Unit
- MU: Multi-User
- MU-MIMO: Multi-User Multiple Input Multiple Output
- NDP: Null Data Packet
- OFDM: Orthogonal Frequency Division Modulation
- OFDMA: Orthogonal Frequency Division Multiple Access
- PHY: Physical Layer
- PLCP: Physical Layer Convergence Protocol
- PPDU: PLCP Protocol Data Unit
- PSDU: PLCP Service Data Unit
- QoS: Quality of Service
- RDG: Reverse Direction Grant
- SDMA: Spatial-Division Multiple Access
- SIFS: Short Interframe Space
- SIG: Signal (e.g., Sub 1GHz)
- STA: Station
- STBC: Space-Time Block Coding
- STF: Short Training Field
- SU: Single User
- TCP: Transmission Control Protocol
- VHT: Very High Throughput
- WLAN: Wireless Local Area Network

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a Node B, Radio Network Controller ("RNC"), evolved Node B (eNB), Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a tablet, a portable communication device, a portable computing device (e.g., a personal data assistant), an entertainment device (e.g., a music or video device, or a satellite radio), a global positioning system (GPS) device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

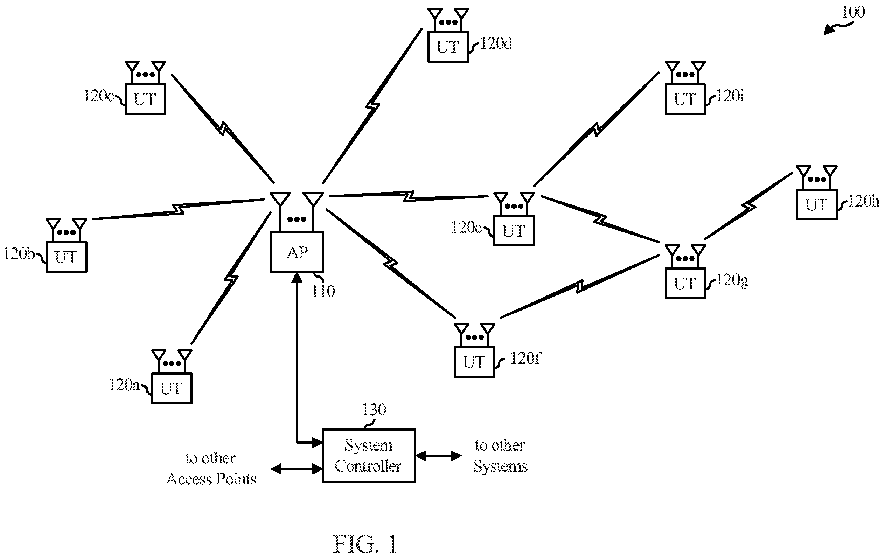

FIG. 1 illustrates a multiple-access multiple-input multiple-output (MIMO) system 100 with access points and user terminals. For simplicity, only one access point 110 is shown in FIG. 1. An access point is generally a fixed station that communicates with the user terminals and may also be referred to as a base station or some other terminology. A user terminal may be fixed or mobile and may also be referred to as a mobile station, a wireless device, or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals. 120 capable of communicating via Spatial Division Multiple Access (SDMA), for certain aspects, the user terminals 120 may also include some user terminals that do not support SDMA. Thus, for such aspects, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *Nₐₚ* antennas and represents the multiple-input (MI) for downlink transmissions and the multiple-output (MO) for uplink transmissions. A set of *K* selected user terminals 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexes in code, frequency or time by some means. *K* may be greater than *Nₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥ 1). The *K* selected user terminals can have the same or different number of antennas.

The SDMA system may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

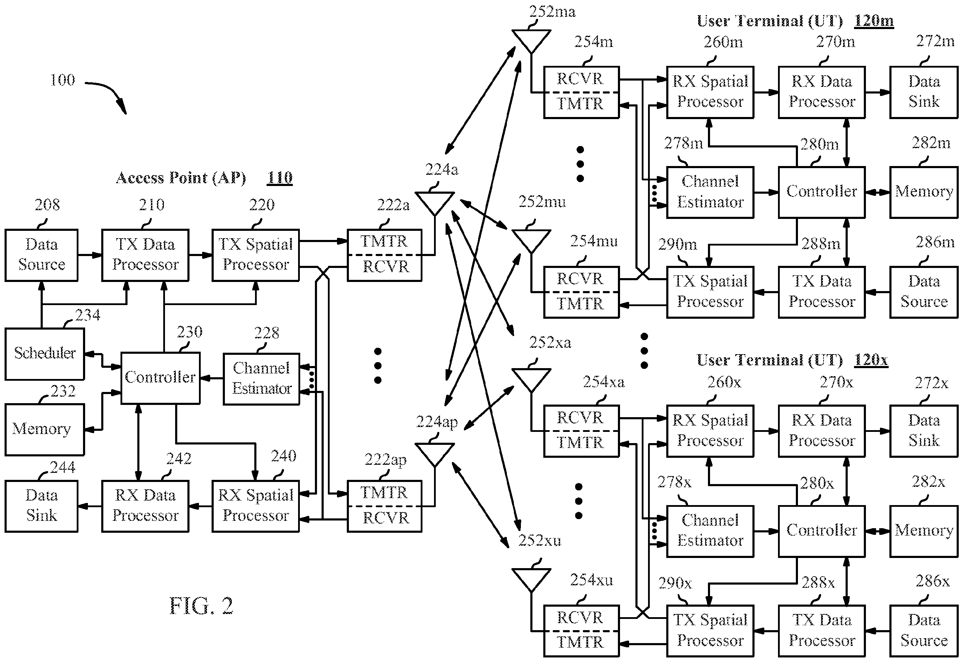

FIG. 2 illustrates a block diagram of access point 110 and two user terminals 120m and 120x in MIMO system 100. The access point 110 is equipped with *Nₜ* antennas 224a through 224t. User terminal 120m is equipped with *N_{ut,m}* antennas 252ma through 252mu, and user terminal 120x is equipped with *N*_{*ut*,*x*} antennas 252xa through 252xu. The access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "*dn*" denotes the downlink, the subscript "*up*" denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn}*, and *Nᵤₚ* and *N_{dn}* may be static values or can change for each scheduling interval. The beam-steering or some other spatial processing technique may be used at the access point and user terminal.

On the uplink, at each user terminal 120 selected for uplink transmission, a transmit (TX) data processor 288 receives traffic data from a data source 286 and control data from a controller 280. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N_{ut,m}* transmit symbol streams for the *N_{ut,m}* antennas. Each transmitter unit (TMTR) of transceiver 254 receives and processes (e.g., converts to analog, amplifies, filters, and frequency upconverts) a respective transmit symbol stream to generate an uplink signal. *N*_{*ut*,*m*} transmitter units of transceiver 254 provide *N_{ut,m}* uplink signals for transmission from *N_{ut,m}* antennas 252 to the access point.

*Nᵤₚ* user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all *Nᵤₚ* user terminals transmitting on the uplink. Each antenna 224 provides a received signal to a respective receiver unit (RCVR) of transceiver 222. Each receiver unit of transceiver 222 performs processing complementary to that performed by transmitter unit of transceiver 254 and provides a received symbol stream. An RX spatial processor 240 performs receiver spatial processing on the *Nₐₚ* received symbol streams from *Nₐₚ* receiver units of transceiver 222 and provides *Nᵤₚ* recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for *N_{dn}* user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides *N_{dn}* downlink data symbol streams for the *N_{dn}* user terminals. A TX spatial processor 220 performs spatial processing (such as a precoding or beamforming, as described in the present disclosure) on the *N_{dn}* downlink data symbol streams, and provides *Nₐₚ* transmit symbol streams for the *Nₐₚ* antennas. Each transmitter unit of transceiver 222 receives and processes a respective transmit symbol stream to generate a downlink signal. *Nₚ* transmitter units of transceiver 222 providing *Nₐₚ* downlink signals for transmission from *Nₐₚ* antennas 224 to the user terminals.

At each user terminal 120, *N_{ut,m}* antennas 252 receive the *Nₐₚ* downlink signals from access point 110. Each receiver unit 254 processes a received signal from an associated antenna 252 and provides a received symbol stream. An RX spatial processor 260 performs receiver spatial processing on *N_{ut,m}* received symbol streams from *N_{ut,m}* receiver units of transceiver 254 and provides a recovered downlink data symbol stream for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix *H_{dn,m}* for that user terminal. Controller 230 derives the spatial filter matrix for the access point based on the effective uplink channel response matrix *H_{up,eff}.* Controller 280 for each user terminal may send feedback information (e.g., the downlink and/or uplink eigenvectors, eigenvalues, SNR estimates, and so on) to the access point. Controllers 230 and 280 also control the operation of various processing units at access point 110 and user terminal 120, respectively.

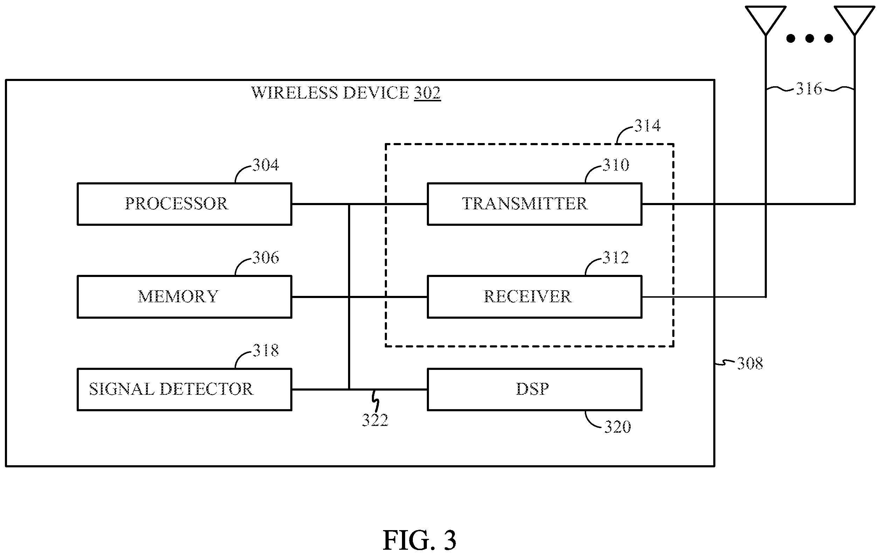

FIG. 3 illustrates various components that may be utilized in a wireless device 302 that may be employed within the MIMO system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

### EXAMPLE TCLAS ELEMENT CLASSIFIER PARAMETER IDENTIFICATION

A traffic classification (TCLAS) element may specify an element that contains a set of parameters which may be used to identify a medium access control (MAC) protocol data unit (MPDU). A TCLAS, element may be used to identify incoming (e.g., from a higher layer in a station (STA) or from the distribution system (DS) in an access point (AP)) MAC service data units (MSDUs) that belong to a particular traffic stream. The TCLAS element may also be used for traffic that does not belong to a Traffic stream, for example, by the flexible multicast service (FMS), directed multicast service (DMS), and traffic filtering service (TFS). According to certain aspects, the TCLAS element may be provided in add traffic stream (ADDTS) request frames and ADDTS response frames only for downlink or bidirectional links.

A classifier type specifies the type of classifier parameters in the TCLAS element. According to certain aspects, the classifier parameters may be defined based on a Type field present in the MPDU to be classified. According to certain aspects, classifier parameters may also be identified based on the Protocol Version (PV) field and/or the From Distribution System (DS) field of the MPDU to be classified.

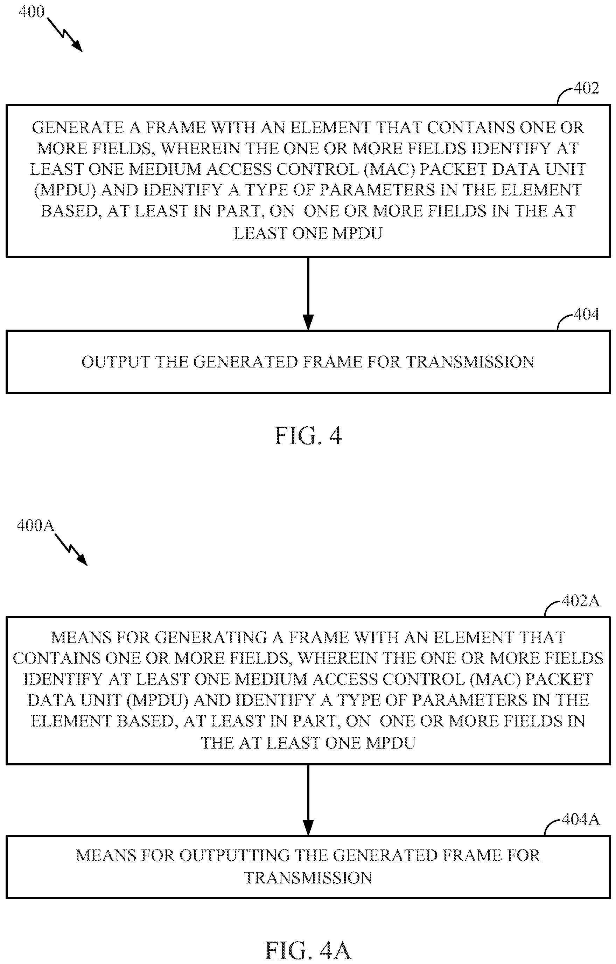

FIG. 4 illustrates example operations 400 that may be performed, for example, by an access point or other type station. The operations 400 begin, at 402, by generating a frame with an element (e.g., a TCLAS element) that contains one or more fields (e.g., a frame classifier type fields), wherein the one or more fields identify at least one medium access control (MAC) packet data unit (MPDU) and identify a type of parameters (e.g., protocol version MPDU MAC header parameters or non-down protocol version MPDU MAC header parameters) in the element based, at least in part, on one or more fields in the at least one MPDU (e.g., a PV field, Type field, and/or From DS field). At 404, the frame is output for transmission (e.g., transmitted or output to an RF front end for transmission).

In certain systems (e.g., IEEE 802.11ah systems), a short frame may be a MPDU) having a protocol version (PV) field in a frame control (FC) field set to 1.

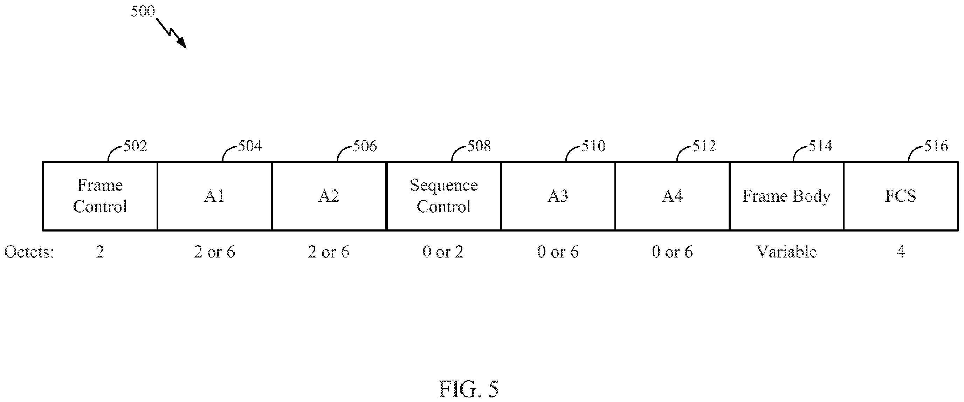

FIG. 5 illustrates an example short frame format 500, according to certain aspects of the present disclosure. As shown in FIG. 5, the short frame format 500 may include a 2-byte Frame Control (FC) field 502, a 2-byte or 6-byte first Address field (A1) 504, a 2-byte or 6-byre second Address field (A2) 506, a 0-byte (e.g., not included) or 2-byte Sequence Control (SC) field 508, a 0-byte or 6-byte third Address (A3) field 510, a 0-byte or 6-byte fourth Address field (A4) 512, a variable length Frame Body field 514, and a 4-byte Frame Check Sequence (FCS) field 516. As shown in FIG. 5. the for short control frames, A1 field 504 and A2 field 506 may be present, however, SC field 508, A3 field 410, and A4 field 512 may not be present in the short frame format 500.

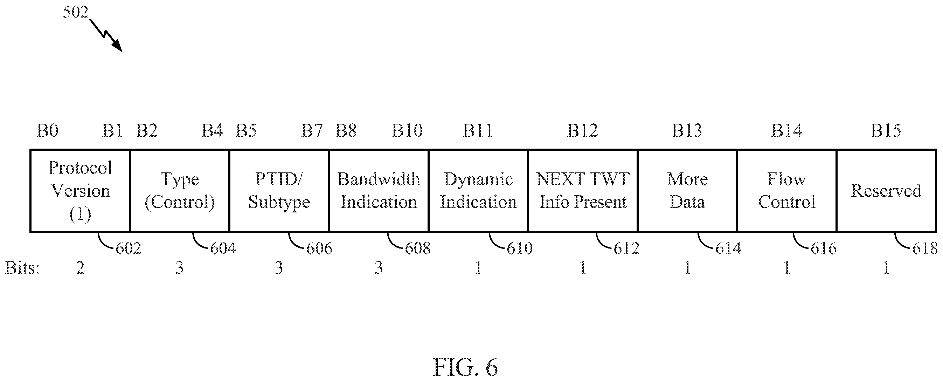

FIG. 6 illustrates subfields of the 16-bit (2-byte) FC field 502 of FIG. 5, in accordance with certain aspects of the present disclosure. As shown in FIG. 6, the FC field 502 may include a 2-byte Protocol Version (PV) subfield 602 set to 1 for short control frames. The FC field 602 may further include a 3-bit Type subfields 604 indicating Control type, a 3-bit PTID/Subtype subfield 606, a 3-bit Bandwidth Indication subfield 608, a 1-bit Dynamic Indication subfield 610, a 1-bit Next TWT Info Present subfield 612, a 1-bit More Data subfield 614, a 1-bit Flow Control subfield 616, a Reserved bit 618. Although not shown in FIG. 6, the FC field 502 may also include a From DS subfield.

According to certain aspects, the Type subfield 604 may be set to Type 3 for Short Data frames.

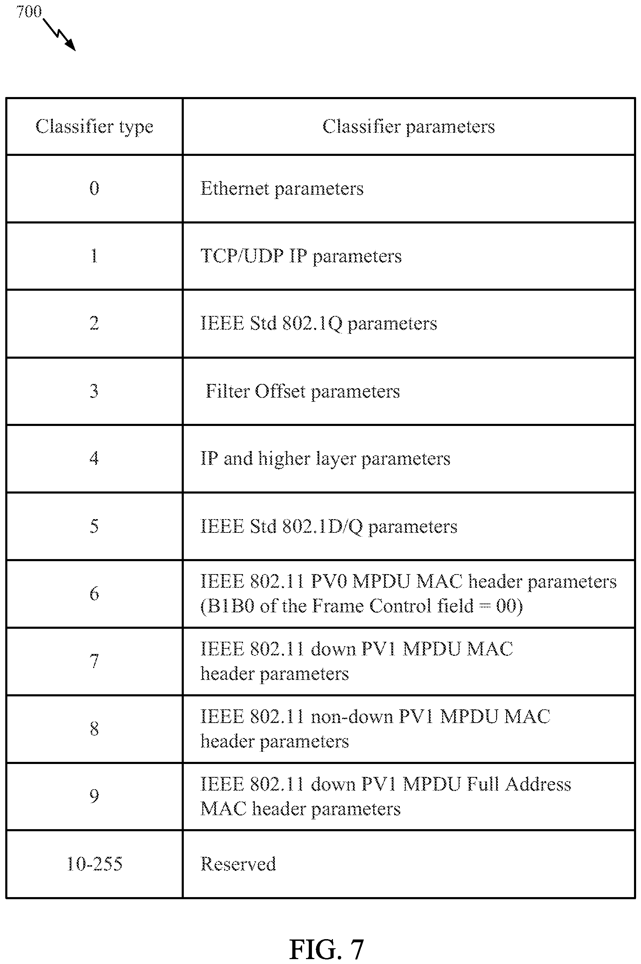

As mentioned above, the classifier parameters may be defined based on a Type field (e.g., Type subfield 604) present in the MPDU to be classified (e.g., short frame 500). FIG. 7 is a table containing example TCLAS element classifier parameters, in accordance with certain aspects of the present disclosure. For example, as shown in the table in FIG. 7, for classifier type 0, the classifier parameters may be Ethernet parameters; for classifier type 1, the classifier parameters may be TCP/UDP IP parameters; for classifier type 2, the classifier parameters may be IEEE 802.1 Q parameters; for classifier type 3, the classifier parameters may be Filter Offset parameters; for classifier type 4, the classifier parameters may be IP and higher layer parameters; for classifier type 5, the classifier parameters may be IEEE 802.1 D/Q parameters; for classifier type 6, the classifier parameters may be IEEE 802.11 PV0 MAC header parameters (e.g., B1B0 of the FC field = 00); for classifier type 7, the classifier parameters may be IEEE 802.11 PV1 MAC header parameters; for classifier type 8, the classifier parameters may be IEEE 802.11 non-down PV1 MAC header parameters; for classifier type 9, the classifier parameters may be IEEE 802.11 down PV1 MPDU Full Address MAC header parameters; and for classifier type 10-255, the classifier parameters may be Reserved.

According to certain aspects, the classifier type value of 8 may apply only to frames where the MAC header includes a value of the PV field (e.g., PV subfield 602) of the FC field (e.g., FC field 502) set to 1 and where the From DS subfield of the FC field is set to a value of 0.

According to certain aspects, the classifier type value of 9 may apply only to frames where the MAC header includes a value of the PV field (e.g., PV subfield 602) of the FC field (e.g., FC field 502) set to 1 and where the Type subfield (e.g., Type field 604) subfield of the FC field is set to a value of 3.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar lumbering. For example, operations 400 illustrated in FIG. 4 correspond to means 400A illustrated in FIG. 4A. Means 400A may include means for generating a frame with a traffic classification (TCLAS) element that contains a set of fields to identify medium access control (MAC) packet data units (MPDUs) and a frame classifier type field that identifies a type or classifier parameters in the TCLAS element based, at least in part, on a Type field present in a MPDU to be classified and being identified in one of the fields, and means for outputting the generated frame for transmission

For example, means for transmitting may comprise a transmitter (e.g., the transmitter unit of transceiver 222) and/or an antenna(s) 224 of the access point 110 illustrated in FIG. 2 or the transmitter 310 and/or antenna(s) 316 depicted in FIG. 3. Means for receiving may comprise a receiver (e.g., the receiver unit of transceiver 222) and/or an antenna(s) 224 of the access point 110 illustrated in FIG. 2 or the receiver 312 and/or antenna(s) 316 depicted in FIG. 3.

In some case, rather than actually transmitting a frame, a device may have an interface to output a frame for transmission. For example, a processor may output a frame, via a bus interface, to an RF front end for transmission. Similarly, rather than actually receiving a frame, a device may have an interface to obtain a frame received from another device. For example, a processor may obtain (or receive) a frame, via a bus interface, from an RF front end for transmission.

Means for processing, means for generating, means for determining, means for outputting and/or means for indicating may comprise a processing system, which may include one or more processors, such as the RX data processor 242, the TX data processor 210, and/or the controller 230 of the access point 110 illustrated in FIG. 2 or the processor 304 and/or the DSP 320 portrayed in FIG. 3.

According to certain aspects, such means may be implemented by processing systems configured to perform the corresponding functions by implementing various algorithms (e.g., in hardware or by executing software instructions). For example, an algorithm for generating a frame with a traffic classification (TCLAS) element that contains a set of fields to identify medium access control (MAC) packet data units (MPDUs) and a frame classifier type field that identifies a type of classifier parameters in the TCLAS element based, at least in part, on a Type field present in a MPDU to be classified and being identified in one of the fields and an algorithm for outputting the generated frame for transmission

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: a, b, or c" is intended to cover a, b, c, a-b, a-c, b-c, and a-b-c., as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c),

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor. As an example, the storage medium may have instructions stored thereon for generating a frame with a traffic classification (TCLAS) element that contains a set of fields to identify medium access control (MAC) packet data units (MPDUs) and a frame classifier type field that identifies a type of classifier parameters in the TCLAS element based, at least in part, on a Type field present in a MPDU to be classified and being identified in one of the fields, and instructions stored thereon for outputting the generated frame for transmission.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer, In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminals), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software module. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software modules.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method (400) for wireless communication, comprising:
generating (402) a frame with an element that contains one or more fields, wherein the one or more fields identify at least one medium access control, MAC, packet data unit, MPDU, (600) and identify a type of parameters in the element based, at least in part, on one or more fields in the at least one MPDU; and
outputting (404) the generated frame for transmission; and wherein:
the one or more fields in the at least one MPDU comprise:
a protocol version, PV, field (602), and
a Type field (604); and
the one or more fields of the element comprise a frame classifier type field; and wherein:
the PV field has a value set to 1,
the Type field has a value set to 3, and
the frame classifier type field has a value set to 9; or wherein:
the one or more fields in the at least one MPDU comprise a From Distribution System, DS, field having a value set to 0,
the PV field has a value set to 1, and
the frame classifier type field has a value set to 8.

2. The method of claim 1, wherein the element comprises a traffic classification, TCLAS, element.

3. The method of claim 1, wherein the type of parameters comprises protocol version MPDU MAC header parameters.

4. The method of claim 1, wherein the type of parameters comprises non-down protocol version MPDU MAC header parameters.

5. An apparatus for wireless communication, comprising:
means (402A) for generating a frame with an element that contains one or more fields, wherein the one or more fields identify at least one medium access control, MAC, packet data unit, MPDU, (600) and identify a type of parameters in the element based, at least in part, on one or more fields in the at least one MPDU; and
means (404A) for outputting the generated frame for transmission, and wherein:
the one or more fields in the at least one MPDU comprise:
a protocol version, PV, field (602), and
a Type field (604); and
the one or more fields of the element comprise a frame classifier type field; and wherein:
the PV field has a value set to 1,
the Type field has a value set to 3, and
the frame classifier type field has a value set to 9; or wherein:
the one or more fields in the at least one MPDU comprise a From Distribution System, DS, field having a value set to 0,
the PV field has a value set to 1, and
the frame classifier type field has a value set to 8.

6. The apparatus of claim 5, wherein the element comprises a traffic classification, TCLAS, element.

7. The apparatus of claim 5, wherein the type of parameters comprises protocol version MPDU MAC header parameters.

8. The apparatus of claim 5, wherein the type of parameters comprises non-down protocol version MPDU MAC header parameters.

9. A station, comprising:
at least one antenna;
the apparatus of any of claims 5 to 8.

## Patentansprüche

1. Ein Verfahren (400) für Drahtloskommunikation, das folgendes aufweist:
Erzeugen (402) eines Rahmens mit einem Element, dass ein oder mehrere Felder enthält, wobei das eine oder die mehreren Felder mindestens eine Mediumzugriffssteuerpaketdateneinheit (600), auch MAC Paketdateneinheit, MPDU = MAC Protocol Data Unit, MAC = Medium Access Control, identifizieren und einen Typ von Parametern in dem Element identifizieren, und zwar zumindest teilweise basierend auf ein oder mehrere Felder in der mindestens einen MPDU; und
Ausgeben (404) des erzeugten Rahmens für Übertragung, und wobei:
die ein oder mehreren Feldern der mindestens einen MPDU folgendes aufweisen:
ein Protokollversionsfeld (602), auch PV Feld, und
ein Typfeld (604); und
wobei die ein oder mehreren Felder des Elements ein Rahmenklassifizierertypfeld aufweisen und wobei:
das PV Feld einen Wert hat, der auf 1 gesetzt ist,
das Typfeld einen Wert hat, der auf 3 gesetzt ist, und
das Rahmenklassifizierertypfeld einen Wert hat, der auf 9 gesetzt ist; oder wobei:
die ein oder mehreren Felder der mindestens einen MPDU ein Vom-Verteilungssystem Feld, auch DS Feld, DS = From Distribution System, haben, das einen Wert hat, der auf 0 gesetzt ist;
das PV Feld einen Wert hat der auf 1 gesetzt ist, und das Rahmenklassifizierertypfeld einen Wert hat, der auf 8 gesetzt ist.

2. Verfahren nach Anspruch 1, wobei das Element ein Verkehrsklassifikationselement, auch TCLAS Feld, TCLAS = Traffic Classification Element, aufweist.

3. Verfahren nach Anspruch 1, wobei der Typ von Parametern Protokollversions- MPDU MAC Header Parameter aufweist.

4. Verfahren nach Anspruch 1, wobei der Typ von Parametern nicht-abwärts-Protokollversions MPDU MAC Header Parameter aufweist.

5. Eine Vorrichtung für Drahtloskommunikation, die folgendes aufweist:
Mittel (402A) zum Erzeugen eines Rahmens mit einem Element, dass ein oder mehrere Felder enthält, wobei die einen oder mehreren Felder mindestens eine Mediumzugriffssteuerpaketdateneinheit (600), auch MAC Paketdateneinheit, MPDU = MAC Protocol Data Unit, MAC = Medium Access Control, identifizieren und einen Typ von Parametern in dem Element identifizieren, und zwar zumindest teilweise basierend auf ein oder mehrere Felder in der mindestens einen MPDU; und
Mittel (404A) zum Ausgeben des erzeugten Rahmens für Übertragung, und wobei:
die ein oder mehreren Feldern der mindestens einen MPDU folgendes aufweisen:
ein Protokollversionsfeld (602), auch PV Feld, und
ein Typfeld (604); und
wobei die ein oder mehreren Felder des Elements ein Rahmenklassifizierertypfeld aufweisen und wobei:
das PV Feld einen Wert hat, der auf 1 gesetzt ist,
das Typfeld einen Wert hat, der auf 3 gesetzt ist, und
dass Rahmenklassifizierertypfeld einen Wert hat, der auf 9 gesetzt ist; oder wobei:
die ein oder mehreren Felder der mindestens einen MPDU ein Vom-Verteilungssystem Feld, auch DS Feld, DS = From Distribution System, haben, das einen Wert hat, der auf 0 gesetzt ist;
das PV Feld einen Wert hat, der auf 1 gesetzt ist, und das Rahmenklassifizierertypfeld einen Wert hat, der auf 8 gesetzt ist.

6. Vorrichtung nach Anspruch 5, wobei das Element ein Verkehrsklassifikationselement, auch TCLAS Feld, TCLAS = Traffic Classification Element, aufweist.

7. Vorrichtung nach Anspruch 5, wobei der Typ der Parameter Protokollversions- MPDU MAC Header Parameter aufweist.

8. Vorrichtung nach Anspruch 5, wobei der Typ von Parametern nichtabwärts-Protokollversions MPDU MAC Header Parameter aufweist.

9. Eine Station, die folgendes aufweist:
mindestens eine Antenne;
die Vorrichtung nach einem der Ansprüche 5 bis 8.

## Revendications

1. Procédé (400) de communication sans fil, comprenant :
générer (402) une trame ayant un élément qui contient un ou plusieurs champs, lesdits un ou plusieurs champs identifiant au moins une unité de paquets de données, MPDU, de contrôle d'accès au support, MAC, (600) et identifiant un type de paramètres dans l'élément sur la base, au moins en partie, d'un ou plusieurs champs dans ledit au moins un MPDU ; et
fournir (404) la trame générée pour transmission ; et dans lequel :
lesdits un ou plusieurs champs dans ledit au moins un MPDU comprennent :
un champ de version de protocole, PV, (602), et
unchamp Type (604) ; et
lesdits un ou plusieurs champs de l'élément comprennent un champ de type de classificateur de trame ; et dans lequel :
le champ PV a une valeur mise à 1,
lechamp Typea une valeur mise à 3, et
le champ de type de classificateur de tramea une valeur mise à 9 ; ou dans lequel :
lesdits un ou plusieurs champs dans ledit au moins un MPDU comprennent un champ Provenance de Système de Distribution, DS, ayant une valeur mise à 0,
le champ PV a une valeur mise à 1, et
le champ de type de classificateur de tramea une valeur mise à 8.

2. Procédé selon la revendication 1, dans lequel l'élément comprend un élément de classification de trafic, TCLAS.

3. Procédé selon la revendication 1, dans lequel le type de paramètres comprend des paramètres d'en-tête MPDUMAC de version de protocole.

4. Procédé selon la revendication 1, dans lequel le type de paramètres comprend des paramètres d'en-tête MPDU MAC de version de protocole non hors service.

5. Dispositif de communication sans fil, comprenant :
des moyens (402A) pour générer une trame ayant un élément qui contient un ou plusieurs champs, lesdits un ou plusieurs champs identifiant au moins une unité de paquets de données, MPDU, de contrôle d'accès au support, MAC, (600) et identifiant un type de paramètres dans l'élément sur la base, au moins en partie, d'un ou plusieurs champs dans ledit au moins un MPDU ; et
des moyens (404A) pour fournir la trame générée pour transmission ; et dans lequel :
lesdits un ou plusieurs champs dans ledit au moins un MPDU comprennent :
un champ de version de protocole, PV, (602), et
un champ Type (604) ; et
lesdits un ou plusieurs champs de l'élément comprennent un champ de type de classificateur de trame ; et dans lequel :
le champ PV a une valeur mise à 1,
le champ Type a une valeur mise à 3, et
le champ de type de classificateur de trame a une valeur mise à 9 ; ou dans lequel :
lesdits un ou plusieurs champs dans ledit au moins un MPDU comprennent un champ Provenance de Système de Distribution, DS, ayant une valeur mise à 0,
le champ PV a une valeur mise à 1, et
le champ de type de classificateur de trame a une valeur mise à 8.

6. Dispositif selon la revendication 5, dans lequel l'élément comprend un élément de classification de trafic, TCLAS.

7. Dispositif selon la revendication 5, dans lequel le type de paramètres comprend des paramètres d'en-tête MPDU MAC de version de protocole.

8. Dispositif selon la revendication 5, dans lequel le type de paramètres comprend des paramètres d'en-tête MPDU MAC de version de protocole non hors service.

9. Station comprenant :
au moins une antenne ;
un dispositif selon l'une quelconque des revendications 5 à 8.
